# EUROPEAN PATENT SPECIFICATION

(11) **EP 2 650 883 B1**
(45) Date of publication and mention of the grant of the patent: **23.11.2016**
(21) Application number: 13162621.0
(22) Date of filing: 05.04.2013
(51) Int. Cl.: G21C 17/00, G21C 17/10, G21D 3/04

(54) **Device for monitoring a nuclear reactor**
Vorrichtung zur Überwachung eines Kernreaktors
Dispositif de surveillance de réacteur nucléaire

(30) Priority: 11.04.2012 US 201213444478
(43) Date of publication of application: 16.10.2013
(73) Proprietor: GE-Hitachi Nuclear Energy Americas LLC, Wilmington, NC 28401 (US)
(72) Inventor: Loewen, Eric P., Wilmington, NC 28401 (US); Triplett, Brian S., Wilmington, NC 28401 (US); Dooies, Brett J., Wilmington, NC 28401 (US)
(74) Representative: Williams, Andrew Richard

(56) References cited:
- WO-A1-2009/048064
- CN-A- 102 352 470
- CN-Y- 201 398 221
- JP-A- H0 779 291
- JP-A- H10 148 694
- JP-A- 2003 014 847
- JP-A- 2007 036 437
- JP-A- 2008 309 748
- JP-A- 2011 229 091
- US-A- 4 661 308
- US-A1- 2003 017 846
- US-A1- 2003 102 967
- US-A1- 2003 227 394
- US-A1- 2004 092 837
- US-A1- 2004 149 918
- US-A1- 2005 030 015
- US-A1- 2012 062 734
- US-A1- 2012 071 094

## Description

This disclosure relates generally to monitoring conditions in and around nuclear reactors during normal and off-normal operating conditions.

During a severe accident, a nuclear reactor, for example a boiling water reactor (BWR), may experience significant fuel damage. The fuel damage may occur as a result of a loss of coolant accident (LOCA). The damage sustained by the reactor may impede attempts to monitor environmental conditions in and around the reactor even after water is applied to cool the reactor. Presently, methods for determining conditions in and around reactors which have experienced an accident include the use of robots. It is desirable to receive information regarding the state of a reactor even after a severe accident has occurred.

One or more embodiments relate to a device for monitoring a nuclear reactor during normal and off-normal operating conditions; and/or a reactor system including the reactor monitoring device.

According to a first aspect of the invention, a device for monitoring a nuclear reactor is provided in accordance with claim 1 herein.

According to another aspect of the invention, a reactor system is provided in accordance with claim 8 herein.

Also disclosed herein is a method of operating a nuclear reactor monitoring device affixed to a reactor structure, the reactor including a sensing unit, a transmitter and a controller. The method may include initializing, at the controller, an operation mode of the reactor monitoring device in a standby mode. Standby mode may be a mode in which the sensing unit performs intermittent environmental measurements of the reactor structure and sends the environmental measurements to the controller. The method may further include determining, at the controller, whether normal or an off-normal operating conditions exist in the reactor structure based on at least one of the environmental measurements and movement measurements indicating movement of the reactor monitoring device. The method may further include maintaining the operation mode as the standby mode if normal operating conditions exist; and changing the operation mode of the reactor to an active mode if off-normal operating conditions exit. The active mode may be a mode in which the sensing unit performs continuous environmental measurements of the reactor structure, the sensing unit sends the environmental measurements to the transmitter, and the transmitter wirelessly transmits the environmental measurements to an external location.

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For purposes of clarity, various dimensions of the drawings may have been exaggerated.

CN 201 398 221 discloses an image collecting system for long distance monitoring that comprises a cellular phone for sensing and collecting e.g. video signals. JPH10148694 A discloses an information communication system in a nuclear power plant. US4661308 A discloses a remote-controlled mobile inspecting and monitoring system. US2003227394 A1 discloses a sensor device that can be used in a nuclear reactor.
FIG. 1 illustrates a reactor system according to an exemplary embodiment.
FIG. 2 illustrates an example of a reactor structure and locations within the reactor structure where monitoring devices may be located according to an exemplary embodiment.
FIG. 3 is a diagram illustrating a monitoring device according to an exemplary embodiment.
FIG. 4 is a flow diagram illustrating a method of operating the monitoring device .

It should be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification. As used herein, the term "and/or" includes any and all combinations of one or more of the associated listed items.

It should be understood that, although the terms first, second, third, etc. may be used herein to describe various elements, components, regions, layers and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of exemplary embodiments.

Spatially relative terms (e.g., "beneath," "below," "lower," "above," "upper," and the like) may be used herein for ease of description to describe one element or feature's relationship to another element(s) or feature(s) as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments are described herein with reference to cross-sectional illustrations that are schematic illustrations of idealized embodiments (and intermediate structures) of exemplary embodiments. As such, variations from the shapes of the illustrations as a result, for example, of manufacturing techniques and/or tolerances, are to be expected. Thus, exemplary embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which exemplary embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

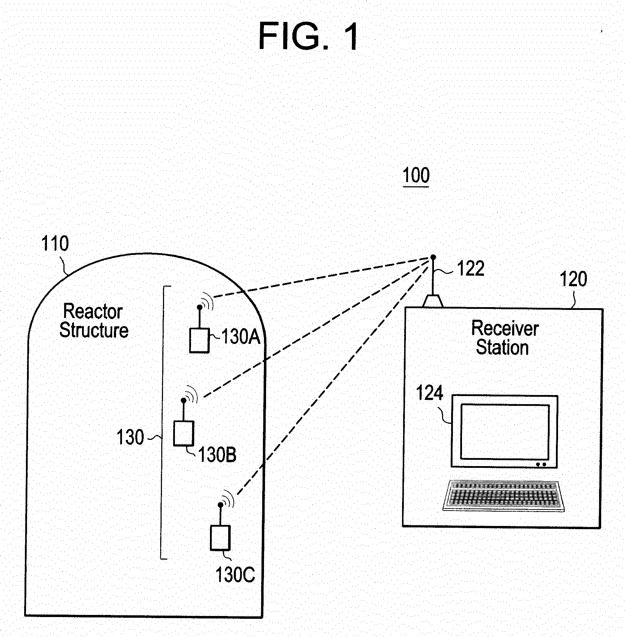

FIG. 1 illustrates a reactor system 100. Reactor system 100 is located in, for example, a nuclear plant. Reactor system 100 includes a reactor structure 110 and a receiver station 120. The reactor structure 110 may be a structure for any type of nuclear reactor including, for example, a boiling water reactor (BWR), a pressurized water reactor (PWR), a gas-cooled reactor, or Canada Deuterium Uranium (CANDU) reactor.

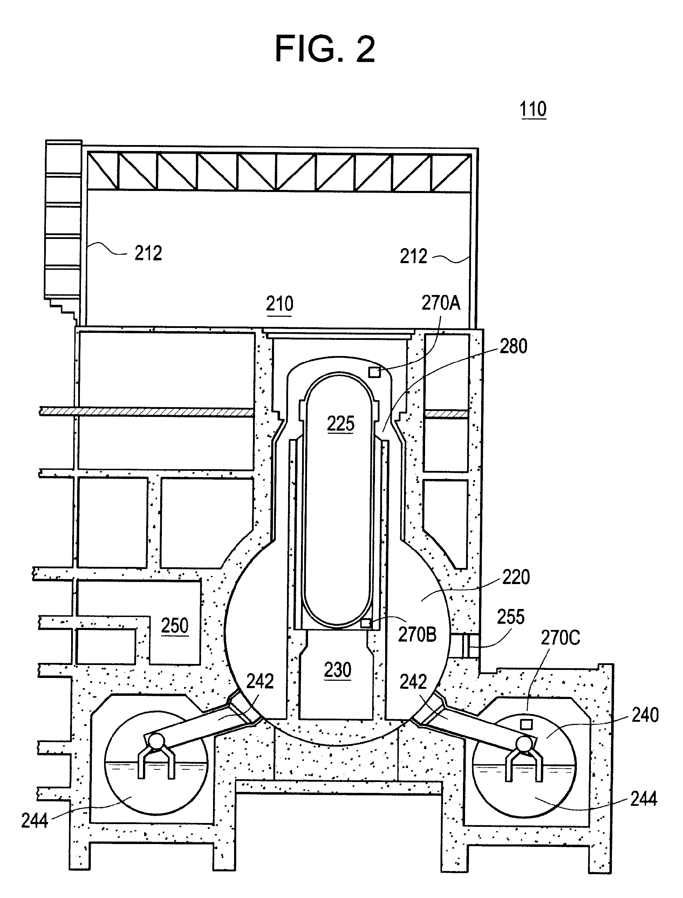

Located on the reactor structure 110 are one or more monitoring devices 130. In the exemplary embodiment illustrated in FIG.1, the one or more monitoring devices 130 includes first through third monitoring devices 130A-C. Though, for the purpose of simplicity, the one or more monitoring devices 130 located on the reactor structure 110 will be explained with reference to first through third monitoring devices 130A-C illustrated in FIG. 1, according to at least one exemplary embodiment, the one or more monitoring devices 130 included in the reactor structure 110 may include any number of monitoring devices. Each of the one or more monitoring devices 130 may have the structure and operation of first through third monitoring devices 130A-C. The reactor structure 110 will be discussed in greater detail below with reference to FIG. 2.

First through third monitoring devices 130A-C are each configured to generate environmental measurements by monitoring environmental conditions of the reactor structure 110 in and around the positions at which the first through third monitoring devices are located. The monitoring devices 130A-C are also capable of measuring movement conditions including, for example, speed and/or acceleration. First through third monitoring devices 130A-C are each located at different positions in the reactor structure 110 so that environmental and/or movement measurements may be generated from different locations within the reactor structure 110. The first through third monitoring devices 130A-C are each configured to transmit data representing the environmental and/ or movement measurements to the receiver station 120 where a plant operator can review the environmental and/ or movement measurements. For example, according to at least one exemplary embodiment, the first through third monitoring devices 130A-C may each generate environmental data by digitizing the environmental measurements. The first through third monitoring devices 130A-C may then broadcast the environmental data, using low-frequency radio waves, for reception at one or more locations outside the reactor structure including, for example, the receiving station 120.

Further, first through third monitoring devices 130A-C are each structured to operate during normal and off-normal operating conditions. As used herein, normal operating conditions refer to operating conditions during which none of the movement or environmental measurements generated by the first through third monitoring device 130A-C are above threshold values determined according to the preference of a plant operator. As used herein, off-normal operating conditions refer to conditions in which any of the movement or environmental measurements generated by first through third monitoring devices 130A-C are above the threshold values determined according to the preference of a plant operator. Off-normal operating conditions may be associated with any of a number of plant transients ranging from less severe events, including elevated reactor pressure or temperature, to very severe events including, for example, a loss of coolant accident (LOCA).

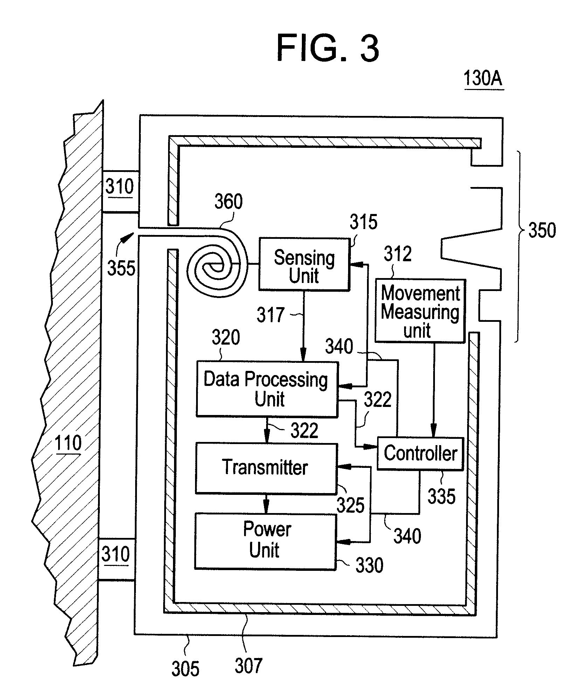

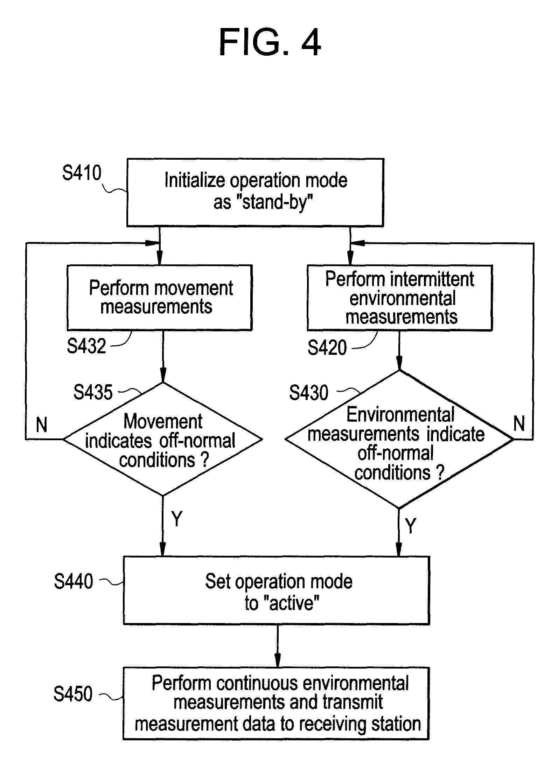

First through third monitoring devices 130A-C each include independent power units, and are each configured to resist the extreme amounts of heat, radiation and/or physical force associated with severe off-normal operating conditions including, for example, conditions during a LOCA. Accordingly, first through third monitoring devices 130A-C are configured to generate and transmit data representing the environmental conditions in the reactor structure 110 even during or after a reactor accident. The structure and operation of the first through third monitoring devices 130A-C will be discussed in greater detail below with reference to FIGS. 3 and 4. Returning to FIG. 1, the receiver station 120 includes a reception device 122 configured to receive the wirelessly transmitted environmental data from the one or more monitoring devices 130A-C. The reception device may be, for example, any device capable of receiving low-frequency radio transmissions. According to at least one exemplary embodiment, the receiver station 120 may include an input/output device 124 where a plant operator can view and manipulate data received from any of the one or more monitoring devices included in the reactor structure 110. The input/output device may be, for example, a personal computer or a terminal including a monitor and a keyboard. Though, for the purpose of simplicity, only one receiving station is illustrated in FIG. 1, the reactor system 100 may include any number of receiving stations each located, for example, at positions outside and remote from the reactor structure 110, and each capable of receiving environmental data broadcasted by the one or more monitoring devices 130 located at one or more positions in the reactor structure 110.

Consequently, using the reactor system 100 according to at least one exemplary embodiment, operators at locations outside the reactor structure 110, including for example the receiving station 120, can receive valuable information regarding conditions at multiple locations inside the reactor structure 110, even during or after a reactor accident including, for example, a LOCA. An example of the reactor structure 110 and locations within the reactor structure 110 where the first through third monitoring devices 130A-C can be located will now be discussed in greater detail with reference to FIG. 2.

FIG. 2 illustrates an example of the reactor structure 110 and locations within the reactor structure 110 where monitoring devices can be located according to at least one exemplary embodiment. As is illustrated in FIG. 2, according to at least one exemplary embodiment, the reactor structure 110 may have the form of a conventional BWR Mark I containment. Referring to FIG. 2, an upper portion of the reactor structure 110 includes a refueling bay 210 having blowout panels 212. Below the refueling bay 210, the reactor structure 110 includes a drywell 220. The drywell 220 encloses a reactor vessel 225 as well as a reactor cavity 230 located beneath the reactor vessel 225. Further, as is illustrated in FIG. 2, the drywell 220 is connected, via vents 242, to a torus 240 which is a torus-shaped wetwell. As used herein the term torus may be considered synonymous to, and may be occasionally referred to as, a wetwell. The torus 240 includes a suppression pool 244. Further, the reactor structure 110 may include a pipe tunnel 250 and a hatch 255.

First through third positions 270A-270C illustrated in FIG. 2 indicate example points within the reactor structure 110 where any of first through third monitoring devices 130A-C may be located. The first position 270A is along an upper surface of the drywell 220, above the reactor vessel 225. The second position 270B is located in a space between the reactor vessel 225 and the reactor cavity 230. The third position 270C is located along an upper inner surface of the wetwell or torus 240. For example, first through third monitoring device 130A-C may be positioned at first through third locations 270A-270C, respectively. Though only three positions 270A-270C are illustrated in FIG. 2, according to at least one exemplary embodiments, monitoring devices within the reactor structure 110, including first through third monitoring devices 130A-C, may be located anywhere within the reactor structure 110. Further examples for locations where monitoring devices can be located include a surface of a reactor skirt 280, the outer surface of the wetwell 240, and the reactor cavity 230. The structure and operation of the one or more monitoring devices 130 will now be discussed in greater detail below with reference to FIGS. 3 and 4.

FIG. 3 is a diagram illustrating the first monitoring device 130A according to exemplary embodiments. Though, for the purpose of simplicity, only the first monitoring device 130A is illustrated, according to at least one exemplary embodiment, each of the one or more monitoring devices 130, including second and third monitoring devices 130B-C, may have the same structure and operation as the first monitoring device 130A. Referring to FIG. 3, the first monitoring device 130A may include a case 305, a shielding material 307, a coupling unit 310, an movement measurement unit 312, a sensing unit 315, a data processing unit 320, a transmitter 325, a power unit 330, and a controller 335.

According to at least one exemplary embodiment, the case 305 encloses and holds the movement measurement unit 312, sensing unit 315, data processing unit 320, transmitter 325, power unit 330, and controller 335. The case 305 may be formed of any rigid material capable of resisting deformation while experiencing extreme physical force including, for example, stainless steel, aluminum, lead, uranium, or similar material.

The shielding material 307 may be part of the case 305 or may be affixed to the inside of the rigid case 305. The shielding material 307 may be any material which insulates the inner portion of the first monitoring device 130A from external heat and/or radiation. For example, the shielding material 307 may include one or more of uranium, tungsten, lead, and sintered nanoparticles.

The coupling unit 310 affixes the case 305 to a surface of a reactor structure being monitored by the first monitoring device 130A. For example, in FIG. 3, the first monitoring device 130A is affixed to the reactor structure 110 through the coupling unit 310. The coupling unit may be any device capable of forming a stable connection between the case 305 and the surface to which the first monitoring device 130A is being attached. For example, the coupling unit 310 may include at least one of magnets, adhesives and bolts.

The movement measurement unit 312 includes hardware and/or software for making measurements regarding movement of the first monitoring device 130A including, for example, speed and/or acceleration. According to at least one exemplary embodiment the movement measurement unit 312 is configured to output a movement signal 316. According to at least one exemplary embodiment, the movement measurement unit 312 may compare movement measurements of the first monitoring device 130A to a movement threshold and output the signal 316 as an excessive movement signal indicating whether or not the movement measurements of the first monitoring device 130A exceed the movement threshold. Alternatively, the movement signal 316 may be a movement value signal indicating a speed and/or acceleration value of the first monitoring device 130A. The movement threshold may be stored in the movement measurement unit 312. The movement threshold may be set, for example, according to the preference of a plant operator. For example, the movement measurement unit 312 may include an element having the structure and/or operation of any know accelerometer for determining the speed and/or acceleration value of the first monitoring device 130A.

According to at least one exemplary embodiment the movement measurement unit 312 may be connected to the controller 335 and provide the movement signal 312 to the controller 335. Additionally, the measurement unit 312 may also be connected to the data processing unit 320.

The sensing unit 315 includes hardware and/or software for performing environmental measurements. The environmental measurements the sensing unit 315 is capable of measuring may include, for example, any of a surface temperature of the first monitoring device 130A, a surface temperature of the surface location of the reactor, a radiation level around the first monitoring device 130A, and air pressure around the first monitoring device 130A.

For example, the sensing unit 315 may include any of one or more B-type thermo couples configured to measure a surface temperature of the monitoring device 130A, an infrared (IR) temperature measuring device configured to measure the surface temperature of the surface location of the reactor to which the first monitoring device 130A is affixed, a radiation collimator configured to measure at least one of gamma rays and neutrons, and a pressure gauge configured to measure air pressure in the vicinity of the device. Further, the case 305 and shielding layer 307 may include ports 350 and 355 to facilitate the taking of measurements by the instrumentation included in the sensing unit 315. For example, ports 350 may include openings and/or indentations in the case 305 and shielding layer which facilitate the measurements of radiation, surface temperature and local reactor temperature. As another example, the case 305 and shielding layer 307 may include an opening 355 to facilitate the taking of pressure measurements by the sensing unit 315. For example, the port 355 could be connected to a bourdon tube pressure gauge 360.

According to at least one exemplary embodiment each of the one or more monitoring devices 130 may include sensing units 315 configured to take the same types of environmental measurements (e.g., radiation measurements, reactor temperature measurements, surface temperature measurements, pressure measurements, etc). Alternatively, according to at least one other exemplary embodiment, each of the monitoring devices 130 may be configured to monitor different types of environmental data based on a region within a reactor structure at which the monitoring device is to be located. For example, referring to FIG. 2, the sensing units 315 of the one or more monitoring devices 130 located in the drywell 220 of the reactor structure 110 may be configured to make different types of environmental measurements compared to the sensing units 315 of the one or more monitoring devices 130 located in the wetwell 240 of the reactor structure 110.

As is illustrated in FIG. 3, the sensing unit 315 is connected to a data processing unit 320. According to at least one exemplary embodiment, the sensing unit 315 may send environmental measurements 317 to the data processing unit 320.

The data processing unit 320 processes received measurements and outputs processed measurement data 322. For example, the data processing unit 320 may process the environmental measurements 317 received from the sensing unit 315. The processing performed by the data processing unit 320 may include, for example, at least one of analog-to-digital conversion, and encryption. According to at least one exemplary embodiment, the data processing unit 320 includes hardware and/or software capable of performing analog-to-digital conversion. For example, the data processing unit 320 may include an analog-to-digital function which converts the environmental measurements 317, which may be received from the sensing unit 315 in analog form, to digital form. The analog-to-digital function may also organize the generated digital data according to the type of measurement the data is associated with such that the different types of digital data (e.g., radiation data, reactor temperature data, surface temperature data, pressure data, etc) are represented in a uniform and organized manner. Further, according to at least one exemplary embodiment, the data processing unit 320 may also include hardware and/or software capable of performing data encryption. For example, the data processing unit 320 may include an encryption function which encrypts the digital measurement data generated by the analog-to-digital conversion function. According to at least one exemplary embodiment, the measurement data may be encrypted to help ensure that only intended recipients are able to read the measurement data. Intended recipients include, for example, the receiving station 120 illustrated in FIG. 1. The analog-to-digital conversion and encryption functions performed by the data processing unit 320 may be performed according to any known methods for analog-to-digital conversion and encryption. The data processing unit 320 outputs the processed environmental measurements to the transmitter 325 in the form of measurement data 322. The measurement data may also include digitized and/or encrypted movement data based on movement measurements received from the movement measurement unit 312. According to at least one exemplary embodiment, the data processing unit 320 may also output the measurement data 322 to the controller 335.

The transmitter 325 transmits the measurement data 322 outward from the first monitoring device 130A wirelessly. The transmitter 325 may transmit the measurement data 322 using radio signals For example, the transmitter 325 may transmit the measurement data 322 using low frequency (LF) or ultra low frequency (ULF) radio signals ranging from 300Hz to 300kHz. The transmitter 325 may include, for example, any known device capable of transmitting data using low frequency radio waves. Low frequency radio waves may be any radio waves low enough to penetrate the infrastructure of a reactor structure to which the first monitoring device 130A is affixed.

The power unit 330 provides any power necessary for the operation of the sensing unit 315, data processing unit 320, transmitter 325 and controller 335. According to at least one exemplary embodiment, the power unit 330 is capable of operating independently from any power source external to the first monitoring device 130A. For example, the power unit 330 may include one or more batteries and/or fuel cells.

According to at least one exemplary embodiment, in order to prolong the lifespan of the power unit 330, one or more elements within the first monitoring device 130A are capable of operating in at least two operation modes: standby and active. The operation modes may be controlled by, for example, the controller 335.

The controller 335 includes hardware and/or software for generating control signals 340 to control an operation mode of one or more of the sensing unit 315, data processing unit 320, transmitter 325 and power unit 330. The operation modes include at least a standby mode for operation during normal, operating conditions, and an active mode for operation during off-normal operating conditions. The controller 335 is capable of selecting an operation mode based on whether or not the reactor structure to which the first monitoring device 130A is affixed is experiencing off-normal conditions including, for example, a LOCA. For example, the controller 335 may receive environmental measurement data 322 from the data processing unit 320, and/or movement signal 316 from the movement measurement unit 312 and determine whether or not off-normal conditions exist based on the measurement data 322 and/or the movement signal 316. The controller 335 may then set the operating condition to standby if normal conditions exist, and set the operation mode to active if off-normal operating conditions exist. The controller 335 may determine whether or not off-normal conditions exist by comparing the measurement data 322, and/or movement measurement indicated by the movement signal 316, to threshold values internally stored in the controller 335. The threshold values may be set according the preference of a plant operator.

Further, if the movement signal 316 generated by the movement measurement unit 312 exceeds the movement threshold stored in the movement measurement unit 312, the controller 335 may change the operating condition from standby to active, for example, based on the movement signal 316 without comparing the movement signal 316 to an internal threshold stored in the controller 335.

Accordingly, the controller 335 is capable of changing the operating state of the first monitoring device 130A from standby to active based on either of the movement signal 316 and the measurement data 322.

In standby mode the controller 335 may control one or more elements within the first monitoring device 130A to operate less often or intermittently in order to conserve power during normal operating conditions. In active mode, the controller 335 may control one or more elements within the first monitoring device 130A to operate more often or continuously. Accordingly, in active mode, the first monitoring device 130A may provide, for example, constant, real-time measurement data to, for example, plant operators at external locations including the receiving station 120 illustrated in FIG. 1 during emergency conditions.

According to at least one exemplary embodiment, in standby mode, the sensing unit 315 may operate intermittently providing environmental measurements 317, for example, once every 1- 5 minutes, and the data processing unit 320 may operate intermittently corresponding to the operation of the sensing unit 315. Further, in standby mode, the data processing unit may provide data only to the controller 335 and not the transmitter 325, and the transmitter 325 may not transmit data at all. Further, in standby mode the power unit 330 may be configured to produce a lower power output in comparison to active mode. Additionally, the movement measurement unit 312 may operate continuously even in standby mode.

According to at least one exemplary embodiment, in active mode, the sensing unit 315 may operate continuously generating environmental measurements 317 constantly, and the data processing unit 320 may operate continuously constantly processing the environmental measurements 317 to generate the measurement data 322. Further, in active mode, the data processing unit 320 may provide the measurement data 322 to the transmitter 325, and the transmitter 325 may continuously transmit the measurement data using, for example, low frequency radio waves. Further, in active mode the power unit 330 may be configured to produce a higher power output in comparison to the standby mode. Additionally, the movement measurement unit 312 may maintain a continuous manner of operation in active mode.

Accordingly, by utilizing the standby and active modes of operation, the first monitoring device 130A may function for extended periods of time even while using an independent power source. According to at least one exemplary embodiment, the sensing unit 315, data processing unit 320, transmitter 325, controller 335, and power unit 330 are configured to provide a standby life span equal to at least 1.5 times the length of a refueling cycle of a reactor being monitored by the first monitoring device 130A.

The operations and functional processes discussed above with respect to the movement measurement unit 312, the sensing unit 315, data processing unit 320, transmitter 325, controller 335, and power unit 330 may be implemented using hardware including, for example, one or more digital signal processors (DSPs), application-specific-integrated-circuits, field programmable gate arrays (FPGAs) or the like. A method of operating the first monitoring unit 130A will now be discussed in greater detail below with reference to FIG. 4.

FIG. 4 is a flow diagram illustrating a method of operating the first monitoring device 130A. FIG. 4 will be discussed with reference to the reactor system 100 illustrated in FIG. 1 and a scenario in which the first monitoring device 130A is initially affixed to the reactor structure 110A during normal, non-emergency conditions.

Referring to FIG. 4, in step S410, the first monitoring device 130A is initialized in a standby state. For example, controller 335 may be configured to output control signals 340 corresponding to a standby state by default. Consequently, upon initial activation of the first monitoring device 130A, each of the sensing unit 315, data processing unit 320, transmitter 325, controller 335, and power unit 330 may be controlled to be in a low-power, standby state as is discussed above with reference to FIG. 3.

After initialization, the first monitoring device 130A detects the presence of off-normal operating conditions by monitoring environmental measurements generated by the sensing unit 315 and/or movement measurements generated by the movement measurement unit 312. The process of monitoring environmental measurements will be discussed below with reference to steps S420 and S430. The process of monitoring movement measurements will be discussed below with reference to steps S432 and S435. According to at least one example, steps S420 and S430 are executed in parallel with steps S432 and S435. Accordingly, the presence of off-normal operating conditions can be determined based on either the environmental measurements generated by the sensing unit 315 or the movement measurements generated by the movement measurement unit 312, for example, independently of one another.

In step S420, the first monitoring device 130A performs intermittent environmental measurements. For example, because, in step S410, the controller 335 outputs control signals 340 controlling the sensing unit 315 and data processing unit 320 to operate in a standby operation mode, as is discussed above with reference to FIG. 3, the sensing unit 315 and the data processing unit 320 respectively generate and process environmental measurements 317 intermittently. For example, the sensing unit 315 and the data processing unit 320 may respectively generate and process environmental measurements 317 every 1-5 minutes. The processing unit 320 processes the environmental measurements 317 and outputs digitized and/or encrypted measurement data 322 to the controller 335.

In step S430, the first monitoring device 130A determines whether or not the measurement data indicates the existence of off-normal operating conditions in the reactor structure 110. For example, the controller 335 may store threshold values corresponding to each type of measurement data (e.g., reactor surface temperature, monitoring device surface temperature, radiation level, pressure level, etc.). Further, the controller 335 may compare one or more of the types of measurement data received from the data processing unit 320 to corresponding threshold values stored within the controller 335.

According to at least one example, if no value of any of the one or more compared types of measurement data exceeds the corresponding threshold value stored in the controller 335, the first monitoring unit 130A returns to step S420, maintains the standby state as the operating state of the first monitoring device 130A, and continues generating and processing the measurement data 317 intermittently.

According to at least one example, if a value of any of the one or more compared types of measurement data does exceed the corresponding threshold value stored in the controller 335, the first monitoring unit 130A proceeds to step S440.

In step S432, the first monitoring device 130A performs movement measurements. For example, the movement measurement unit 312 may perform measurements regarding the movement of the first monitoring device 130A and generate the movement signal 316 based on the measurements. The movement measurement unit 312 may output the movement signal 316 to the controller 335.

In step S435, the first monitoring device 130A may determine whether or not movement measurements performed by the movement measurement unit 312 indicate off-normal operating conditions. For example, the movement signal 316 may be a measurement signal which includes data indicating a value of the movement measurements performed by the movement measurement unit 312. The controller 335 may compare the values indicated by the movement signal 316 to a threshold value stored in the controller 335 and determine that off-normal operating conditions exist if the values exceed the threshold. Alternatively, the movement measurement unit 312 may compare the movement measurements to a threshold value stored in the movement measurement unit 312, and generate the movement signal 316 as an excessive movement signal based on the comparison. The excessive movement signal may have, for example, two values including a first value indicating that the movement measured by the movement measuring device 312 does not exceed the movement threshold, and a second value indicating that the movement measured by the movement measuring device 312 exceeds the movement threshold. The controller 335 may determine that off-normal operating conditions exist if the value of the movement signal 316 indicates that the measured movement exceeds the movement threshold.

According to at least one example, if the measured movement indicated by the movement signal 316 does not exceed the corresponding threshold value stored in the controller 335, or the movement signal 316 has a value indicating that that the movement measured by the movement measuring device 312 does not exceed the movement threshold stored in the movement measurement unit 312, the first monitoring unit 130A returns to step S432, and maintains the standby state as the operating state of the first monitoring device 130A, and continues monitoring the movement measurements performed by the movement measurement unit 312.

According to at least one example, if the measured movement indicated by the movement signal 316 does exceed the corresponding threshold value stored in the controller 335, or the movement signal 316 has a value indicating that that the movement measured by the movement measuring device 312 does exceed the movement threshold stored in the movement measurement unit 312, the first monitoring unit 130A proceeds to step S440.

In step S440, the first monitoring device 130A changes the operation state of the first monitoring device 130A from standby to active. For example, the controller 335 ceases outputting standby control signals and starts outputting active control signals as control signals 340.

In step S450, the first monitoring device 130A performs continuous environmental measurements and transmits measurement data to the receiving station 120. For example, because, in step S440, the controller 335 began outputting active signals as control signals 340, each of the sensing unit 315, data processing unit 320, transmitter 325, controller 335, and power unit 330 are controlled to be in an active operation mode as is discussed above with reference to FIG. 3. Consequently, according to at last one example, in step S450 the sensing unit 315 generates environmental measurements 317 continuously, the data processing unit 320 processes the environmental measurements 317 and generates the measurement data 322 continuously, and the transmitter continuously transmits the measurement data 322 to the receiver station 120. Thus, during a reactor emergency, plant operators at the receiver station 120 receive real-time information regarding environmental conditions within the reactor structure 110 which can be used to intelligently plan and execute containment strategies.

While a number of exemplary embodiments have been disclosed herein, it should be understood that other variations may be possible. Such variations are not to be regarded as a departure from the scope of the present disclosure, and all such modifications as would be obvious to one skilled in the art are intended to be included within the scope of the following claims.

## Claims

1. A device (130) for monitoring a nuclear reactor (110), the device comprising:
a case (305) formed of a rigid material, the case (305) including a shielding layer (307) configured to insulate an internal portion of the device (130) from external heat and radiation, the shielding layer (307) includes at least one of uranium, tungsten, lead, and sintered nanoparticles;
a coupling unit (310) configured to adhere the case (305) to a surface location of a nuclear reactor (110);
a sensing unit (315) configured to generate environmental measurements (317) by measuring environmental conditions in a vicinity of the device (130);
a data processing unit (320) configured to generate measurement data (322) by processing the environmental measurements (317);
a transmitter (325) configured to transmit the measurement data (322) externally from the device (130) as radio waves; and
a power unit (330) configured to power the device (130) independently of a power source external to the device (130);
a movement measurement unit (312) configured to generate movement measurements (316) by measuring movement conditions of the monitoring device (130), the movement conditions including at least one of speed and acceleration;
a controller (335), the controller (335) configured to:
determine whether normal operating conditions or off-normal operating conditions exist in the nuclear reactor (110) based on at least one of the environmental measurements (317) and the movement measurements (316), and
control, based on the determined condition, an operation mode of at least one of the sensing unit (315), the data processing unit and the transmitter, wherein:
in the normal operating conditions, at least one of the sensing unit, the data processing unit and the transmitter is operated intermittently;
in the off-normal operating conditions, at least one of the sensing unit, the data processing unit and the transmitter is operated continuously;
wherein the data processing unit (320), the power unit (330), the sensing unit (315), the transmitter (325) and the controller (335) are inside the case (305).

2. The device of claim 1, wherein the case (305) is formed of at least one of stainless steel, aluminum, lead, and uranium.

3. The device of claim 1 or 2, wherein the sensing unit (315) is configured to generate the environmental measurements by measuring one or more of a surface temperature of the device (130), a surface temperature of the surface location of the nuclear reactor (110), a radiation level around the device (130), and air pressure around the device (130).

4. The device of any of claims 1 to 3, wherein the sensing unit (315) includes one or more B-type thermocouples configured to measure the surface temperature of the device and/or an infrared temperature measuring device configured to measure the surface temperature of the surface location of the nuclear reactor (110).

5. The device of any preceding claim, wherein the sensing unit (315) includes a radiation collimator configured to measure at least one of gamma rays and neutrons and/or a pressure gauge configured to measure air pressure in a vicinity of the device (130).

6. The device of any preceding claim, wherein the transmitter (325) is configured to transmit the measurement data using low frequency (LF) or ultra low frequency (ULF) radio signals.

7. The device of any preceding claim, wherein the data processing unit (320) includes an analog-to-digital converter (ADC) configured to generate the measurement data by performing analog-to-digital conversion on the environmental measurements and an encryption unit configured to encrypt the measurement data.

8. A reactor system (100), the system comprising:
a nuclear reactor (110); and
one or more monitoring devices (130A-C) each attached to a respective surface location of the nuclear reactor (110), each monitoring device (130A-C) as recited in any of claims 1 to 7.

9. The system of claim 8, wherein, for each of the one or more monitoring devices (130), the surface location on the nuclear reactor (110) to which the monitoring device (130) is affixed is located at one of a reactor skirt of the nuclear reactor (110), a reactor dome area of the nuclear reactor (110), and a wetwell (240) of the nuclear reactor (110).

10. The system of claim 8, wherein the one or more monitoring devices (130) includes at least three monitoring devices (130A-C) each affixed to a different location of the nuclear reactor (110).

11. The system of claim 8, further comprising:
a receiver station (120) positioned outside the monitoring device (130) and the nuclear reactor (110) and configured to receive the measurement data (317) transmitted by the transmitter (325), wherein the receiver station (120) includes:
a reception device (122) configured to receive the measurement data (317) transmitted by the transmitter (325);
a display device configured to display information based on the received measurement data (317); and
an input unit (124) configured to receive input from an operator of the receiver station (120).

## Patentansprüche

1. Vorrichtung (130), zur Überwachung eines Kernreaktors (110), wobei die Vorrichtung umfasst:
ein Gehäuse (305), das aus starrem Material gebildet ist, wobei das Gehäuse (305) eine Schutzschicht (307) enthält, die konfiguriert ist, um einen inneren Abschnitt der Vorrichtung (130) vor äußerer Wärme und Strahlung zu isolieren, wobei die Schutzschicht (307) Uran und/oder Wolfram und/oder Blei und/oder gesinterte Nanopartikel enthält;
eine Kopplungseinheit (310), die konfiguriert ist, um das Gehäuse (305) an einer Oberflächenanordnung eines Kernreaktors (110) anzukleben;
eine Sensoreinheit (315), die konfiguriert ist, um Umgebungsmessungen (317) zu erzeugen, indem Umgebungsbedingungen in einer Nachbarschaftsumgebung der Vorrichtung (130) gemessen werden;
eine Datenverarbeitungseinheit (320), die konfiguriert ist, um Messdaten (322) zu erzeugen, indem die Umgebungsmessungen (317) verarbeitet werden;
einen Transmitter (325), der konfiguriert ist, um die Messdaten (322) von der Vorrichtung (130) nach außen als Funkwellen zu übertragen; und
eine Leistungseinheit (330), die konfiguriert ist, um die Vorrichtung (130) unabhängig von einer außerhalb der Vorrichtung (130) befindlichen Leistungsquelle mit Leistung zu versorgen;
eine Einheit (312) zur Bewegungsmessung, die konfiguriert ist, um Bewegungsmessungen (316) zu erzeugen, indem Bewegungsbedingungen der Überwachungsvorrichtung (130) gemessen werden, wobei die Bewegungsbedingungen eine Geschwindigkeit und/oder eine Beschleunigung enthalten;
eine Steuereinheit (335), wobei die Steuereinheit (335) konfiguriert ist, um:
auf der Basis der Umgebungsmessungen (317) und/oder der Bewegungsmessungen (316) zu bestimmen, ob normale Betriebsbedingungen oder nicht normale Betriebsbedingungen in dem Kernreaktor (110) existieren, und auf der Basis der bestimmten Bedingung einen Betriebsmodus der Sensoreinheit (315) und/oder der Datenverarbeitungseinheit und/oder des Transmitters zu steuern, wobei:
in den normalen Betriebsbedingungen die Sensoreinheit und/oder die Datenverarbeitungseinheit und/oder der Transmitter mit Unterbrechungen arbeiten;
in den nicht normalen Betriebsbedingungen die Sensoreinheit und/oder die Datenverarbeitungseinheit und/oder der Transmitter kontinuierlich arbeiten;
wobei sich die Datenverarbeitungseinheit (320), die Leistungseinheit (330), die Sensoreinheit (315), der Transmitter (325) und die Steuereinheit (335) innerhalb des Gehäuses (305) befinden.

2. Vorrichtung nach Anspruch 1, wobei das Gehäuse (305) aus rostfreiem Stahl und/oder Aluminium und/oder Blei und/oder Uran gebildet ist.

3. Vorrichtung nach Anspruch 1 oder 2, wobei die Sensoreinheit (315) konfiguriert ist, um Umgebungsmessungen zu erzeugen, indem eine oder mehrere Messungen von einer Oberflächentemperatur der Vorrichtung (130), von einer Oberflächentemperatur der Oberflächenanordnung des Kernreaktors (110), von einem Strahlungspegel um die Vorrichtung (130) und/oder von einem Luftdruck um die Vorrichtung (130) gemessen werden.

4. Vorrichtung nach einem der Ansprüche 1 bis 3, wobei die Sensoreinheit (315) ein oder mehrere Thermoelemente vom B-Typ, die konfiguriert sind, um die Oberflächentemperatur der Vorrichtung zu messen, und/oder eine Vorrichtung zur Messung der Infrarottemperatur, die konfiguriert ist, um die Oberflächentemperatur der Oberflächenanordnung des Kernreaktors (110) zu messen, enthält.

5. Vorrichtung nach einem vorhergehenden Anspruch, wobei die Sensoreinheit (315) einen Strahlungskollimator, der konfiguriert ist, Gammastrahlen und/oder Neutronen zu messen, und/oder ein Manometer, das konfiguriert ist, um den Luftdruck in einer benachbarten Umgebung der Vorrichtung (130) zu messen, enthält.

6. Vorrichtung nach einem vorhergehenden Anspruch, wobei der Transmitter (325) konfiguriert ist, um die Messdaten unter Verwendung von Funksignalen einer Niedrigfrequenz (LF) oder einer Ultra-Niedrigfrequenz (ULF) zu übertragen.

7. Vorrichtung nach einem vorhergehenden Anspruch, wobei die Datenverarbeitungseinheit (320) einen Analog/Digital- Umsetzer (ADC), der konfiguriert ist, um die Messdaten zu erzeugen, indem eine Analog/Digital-Umsetzung der Umgebungsmessungen durchgeführt wird, und eine Codierungseinheit, die konfiguriert ist, um die Messdaten zu codieren, enthält.

8. Reaktorsystem (100), wobei das System umfasst:
einen Kernreaktor (110); und
ein oder mehrere Überwachungsvorrichtungen (130A-C), wobei jede an einer jeweiligen Oberflächenanordnung des Kernreaktors (110) befestigt ist und jede Überwachungsvorrichtung (130A-C) eine solche nach einem der Ansprüche 1 bis 7 ist.

9. System nach Anspruch 8, wobei für jede der einen oder der mehreren Überwachungsvorrichtungen (130) die Oberflächenanordnung auf dem Kernreaktor (110), an der die Überwachungsvorrichtung (130) befestigt ist, an einem Reaktormantel des Kernreaktors (110) oder auf der Fläche der Reaktorkuppel des Kernreaktors (110) oder an der Kondensationskammer (240) des Kernreaktors (110) angeordnet ist.

10. System nach Anspruch 8, wobei die eine oder die mehreren Überwachungsvorrichtungen (130) mindestens drei Überwachungsvorrichtungen (130A-C) enthalten, wobei jede an einer anderen Anordnung des Kernreaktors (110) befestigt ist.

11. System nach Anspruch 8, das ferner umfasst:
eine Empfangsstation (120), die außerhalb der Überwachungsvorrichtung (130) und des Kernreaktors (110) positioniert ist und die konfiguriert ist, um die Messdaten (317), die von dem Transmitter (325) übertragen werden, zu empfangen, wobei die Empfangsstation (120) enthält:
eine Empfangsvorrichtung (122), die konfiguriert ist, um die Messdaten (317), die von dem Transmitter (325) übertragen werden, zu empfangen;
eine Anzeigevorrichtung, die konfiguriert ist, um auf der Basis der empfangenen Messdaten (317) Informationen anzuzeigen; und
eine Eingabeeinheit (124), die konfiguriert ist, um Eingaben von einem Bediener (Operator) der Empfangsstation (120) zu empfangen.

## Revendications

1. Dispositif (130) pour la surveillance d'un réacteur nucléaire (110), le dispositif comprenant:
une enveloppe (305) formée d'un matériau rigide, l'enveloppe (305) comprenant une couche de protection (307) configurée pour isoler une partie interne du dispositif (130) de la chaleur et des rayonnements externes, la couche de protection (307) comprenant au moins l'un(e) parmi l'uranium, le tungstène, le plomb et des nanoparticules frittées ;
une unité de couplage (310) configurée pour fixer l'enveloppe (305) à un emplacement de surface d'un réacteur nucléaire (110) ;
une unité de détection (315) configurée pour générer des mesures environnementales (317) en mesurant des conditions environnementales au voisinage du dispositif (130) ;
une unité de traitement de données (320) configurée pour générer des données de mesure (322) par traitement des mesures environnementales (317) ;
un émetteur (325) configuré pour transmettre les données de mesure (322) à l'extérieur du dispositif (130) sous la forme d'ondes radio ; et
une unité d'alimentation (330) configurée pour alimenter le dispositif (130) indépendamment d'une source d'énergie externe au dispositif (130) ;
une unité de mesure de déplacement (312) configurée pour générer des mesures de déplacement (316) en mesurant les conditions de déplacement du dispositif de surveillance (130), les conditions de déplacement comprenant au moins l'une parmi la vitesse et l'accélération ;
un dispositif de commande (335), le dispositif de commande (335) étant configuré pour :
déterminer si des conditions de fonctionnement normales ou des conditions de fonctionnement anormales existent dans le réaction nucléaire (110) sur la base d'au moins l'une des mesures environnementales (317 et des mesures de déplacement (316), et
commander, sur la base de l'état déterminé, un mode de fonctionnement d'au moins l'un(e) de l'unité de détection (315), de l'unité de traitement de données et de l'émetteur, dans lequel,
dans les conditions de fonctionnement normales, au moins l'un(e) de l'unité de détection, de l'unité de traitement de données et de l'émetteur fonctionne par intermittence ;
dans les conditions de fonctionnement anormales, au moins l'un (e) de l'unité de détection, de l'unité de traitement de données et de l'émetteur fonctionne en continu ;
dans lequel l'unité de traitement de données (320), l'unité d'alimentation (330), l'unité de détection (315), l'émetteur (325) et le dispositif de commande (335) sont à l'intérieur de l'enveloppe (305).

2. Dispositif selon la revendication 1, dans lequel l'enveloppe (305) est formée d'au moins l'un de l'acier inoxydable, de l'aluminium, du plomb et de l'uranium.

3. Dispositif selon la revendication 1 ou 2, dans lequel l'unité de détection (315) est configurée pour générer les mesures environnementales en mesurant un(e) ou plus d'une température de surface du dispositif (130), d'une température de surface de l'emplacement de surface du réacteur nucléaire (110), d'un niveau de rayonnement autour du dispositif (130) et d'une pression d'air autour du dispositif (130).

4. Dispositif selon l'une quelconque des revendications 1 à 3, dans lequel l'unité de détection (315) comprend un ou plusieurs thermocouples de type B configurés pour mesurer la température de surface du dispositif et/ou un dispositif de mesure de température infrarouge configuré pour mesurer la température de surface de l'emplacement de surface du réacteur nucléaire (110).

5. Dispositif selon l'une quelconque des revendications précédentes, dans lequel l'unité de détection (315) comprend un collimateur de rayonnement configuré pour mesurer au moins l'un de rayons gamma et de neutrons et/ou une jauge de pression configurée pour mesurer la pression de l'air au voisinage du dispositif (130).

6. Dispositif selon l'une quelconque des revendications précédentes, dans lequel l'émetteur (325) est configuré pour transmettre les données de mesure en utilisant des signaux radio de fréquence basse (LF) ou de fréquence ultrabasse (ULF).

7. Dispositif selon l'une quelconque des revendications précédentes, dans lequel l'unité de traitement de données (320) comprend un convertisseur analogique-numérique (ADC) configuré pour générer les données de mesure en effectuant une conversion analogique-numérique sur les mesures environnementales et une unité de cryptage configurée pour crypter les données de mesure.

8. Système de réacteur (100), le système comprenant :
un réacteur nucléaire (110) ; et
un ou plusieurs dispositifs de surveillance (130A-C), chacun fixé à un emplacement de surface respectif du réacteur nucléaire (110), chaque dispositif de surveillance (130A-C) étant conforme à l'une quelconque des revendications 1 à 7.

9. Système selon la revendication 8, dans lequel, pour chacun des un ou plusieurs dispositifs de surveillance (130), l'emplacement de surface sur le réacteur nucléaire (110) auquel le dispositif de surveillance (130) est fixé est situé sur l'un(e) d'une jupe du réacteur nucléaire (110), d'un dôme du réacteur nucléaire (110) et d'un puits humide (240) du réacteur nucléaire (110).

10. Système selon la revendication 8, dans lequel les un ou plusieurs dispositifs de surveillance (130) comprennent au moins trois dispositifs de surveillance (130A-C), chacun fixé à un emplacement différent du réacteur nucléaire (110).

11. Système selon la revendication 8, comprenant en outre :
une station réceptrice (120) positionnée à l'extérieur du dispositif de surveillance (130) et du réacteur nucléaire (110) et configurée pour recevoir les données de mesure (317) transmises par l'émetteur (325), dans lequel la station réceptrice (120) comprend :
un dispositif de réception (122) configuré pour recevoir les données de mesure (317) transmises par l'émetteur (325) ;
un dispositif d'affichage configuré pour afficher des informations sur la base des données de mesure reçues (317) ; et
une unité d'entrée (124) configurée pour recevoir une entrée d'un opérateur de la station réceptrice (120).
